# EUROPÄISCHE PATENTSCHRIFT

(11) **EP 1 201 940 B1**
(45) Veröffentlichungstag und Bekanntmachung des Hinweises auf die Patenterteilung: **06.05.2004**
(21) Anmeldenummer: 01121242.0
(22) Anmeldetag: 05.09.2001
(51) Int. Cl.: F16B 37/04

(54) **Schienenmutterprofil**
Profil section of a rail nut
Profil d'écrou pour rail

(30) Priorität: 23.10.2000 DE 10052534
(43) Veröffentlichungstag der Anmeldung: 02.05.2002
(73) Patentinhaber: HILTI Aktiengesellschaft, 9494 Schaan (LI)
(72) Erfinder: Herb, Armin, 86974 Apfeldorf (DE); Hoffmann, Armin, 86899 Landsberg (DE); Unverzagt, Stefan, 86929 Penzing (DE)
(74) Vertreter: Wildi, Roland

(56) Entgegenhaltungen:
- WO-A-98/36180
- FR-A- 2 636 687
- US-A- 5 489 173

## Beschreibung

Die Erfindung betrifft eine Befestigungsvorrichtung zum Befestigen von Rohren oder dergleichen Gegenständen mit einer, einen C-förmigen Querschnitt sowie eine Längsöffnung aufweisenden, Montageschiene und mit einer Halteplatte, die eine, quer zur Plattenebene verlaufende, Durchgangsbohrung mit einem Innengewinde aufweist, wobei die Halteplatte eine, parallel zur Plattenebene verlaufende, Breite aufweist, die höchstens der Breite der Längsöffnung entspricht und senkrecht dazu eine, parallel zur Plattenebene verlaufende, Länge aufweist, die grösser als die Breite der Längsöffnung ausgebildet ist.

Befestigungsvorrichtungen der oben genannten Art finden insbesondere Anwendung beim Abhängen und Verstreben von Gegenständen, wie beispielsweise Rohren oder dergleichen. Auf einen Untergrund oder Bauteil wird eine Montageschiene mit einer Längsöffnung befestigt, beispielsweise durch mehrere Segmentanker. Zur Befestigung eines Befestigungselements an der Montageschiene wird eine Halteplatte durch die Längsöffnung in den Innenraum der Montageschiene eingeführt und um einen Winkel verschwenkt, beispielweise 90°, so dass das Halteteil die freien Enden, sogenannte Haltevorsprünge hintergreift. Das Halteteil weist zum Festlegen eines Befestigungselements, beispielsweise einer Gewindestange, eine Durchgangsbohrung mit einem Innengewinde auf, das in einen formschlüssigen Eingriff mit einer zumindest teilweise an dem Befestigungselement angeordneten Aussenprofilierung bringbar ist. Um ein Einführen des Halteteils durch die Längsöffnung zu gewährleisten, entspricht die Breite des Halteteils höchstens der Breite der Längsöffnung und dadurch, dass die sich senkrecht zur Breite des Halteteils erstreckende Länge grösser als die Breite der Längsöffnung ausgebildet ist, ist durch ein Verschwenken des in den Innenraum eingeführten Halteteils ein Hintergreifen der Haltevorsprünge der Montageschiene durch die Halteplatte möglich.

Aus dem allgemein bekannten Stand der Technik, beispielsweise der DE 3 811 974 C2 ist eine Befestigungsvorrichtung mit einer C-förmigen Monatgeschiene und einem unrunden Halteteil bekannt. Das Halteteil ist beispielsweise als Gussteil ausgebildet.

Die US 5,489,173 A zeigt eine weitere Befestigungsvorrichtung, welche ein unrundes Halteteil aufweist, das zur besseren Handhabung ein Federelement umfasst. An den kürzeren Seiten des Halteteiles sind an der, der Längsöffnung der C-förmigen Montagescheine abgewandten Seite des Halteteiles Stege zur Ausrichtung des Federelementes vorgesehen. Zur Gewährleistung der Stabilität ist das Halteteil massiv ausgebildet.

Nachteilig bei den allgemein bekannten Lösungen ist, dass zur Herstellung des Halteteil relativ zu dessen Abmessungen viel Material aufgewendet werden muss, was einer wirtschaftlichen Herstellung der Befestigungsvorrichtung nicht dienlich ist.

Ferner wirkt sich die massive Bauweise der Halteplatte negativ auf das Gesamtgewicht der Befestigungsvorrichtungen aus, insbesondere falls mehrere Halteplatten zur Anwendung gelangen.

Der vorliegenden Erfindung liegt die Aufgabe zugrunde, eine Befestigungsvorrichtung mit einer Montageschiene und einer Halteplatte zu schaffen, das wirtschaftlich herstellbar und ein geringes Gewicht aufweist und ausserdem eine hohe Stabilität gewährleistet.

Erfindungsgemäss wird die Aufgabe dadurch gelöst, dass die Halteplatte auf der, der Längsöffnung abgewandten Seite, zumindest einen der Versteifung und der Positionierung dienenden, sich in Richtung der grösseren Lange erstreckenden Steg aufweist.

Dadurch, dass die Halteplatte auf der der Längsöffnung der Montageschiene abgewandten Seite zumindest ein Steg zur Versteifung und Positionierung der Halteplatte angeordnet ist, ist die Ausbildung der Halteplatte auf eine Material sparende und gewichtssparende Art und Weise möglich. Die Stege stellen unter anderem auch die Möglichkeit der Positionierung eines zur Anwendung gelangenden Befestigungselements sicher. Das heisst durch den Steg ist beispielsweise ein axial zur Innenbohrung sich erstreckender Raum zur teilweisen Aufnahme des Befestigungselements sichergestellt. Damit ist es möglich das Befestigungselement ohne ein genaues Ablängen anzuwenden.

Vorzugsweise sind zwei parallel zueinander verlaufende Stege vorgesehen, um eine ausreichende Stabilität der Halteplatte zu gewährleisten. Die Stege könne je nach Anforderungen unterschiedliche Querschnitte aufweisen, wie beispielsweise rundlich, rechteckig oder dergleichen. Betreffend der Abmessungen der Stege sind die für die Befestigungsvorrichtung vorgesehenen Rahmenbedingungen zu berücksichtigen.

Die Stege sind vorteilhafterweise beidseits des Innengewindes angeordnet, um eine optimale Stabilität gerade im Bereich des Innengewindes sicherzustellen, da dieses eine Schwächung der Halteplatte hervorruft.

Der Querschnitt der Halteplatte ist vorzugsweise U-förmig ausgebildet, wobei die freien Enden die Stege bilden. Diese Ausführung stellt bezüglich des Materialaufwandes und der Wirtschaftlichkeit das Optimum dar.

Die Stege bilden vorteilhafterweise, zumindest auf einer Seite des Innengewindes, eine Sikke, um eine Überlastung im Bereich des Innengewindes zu verhindern. Für Befestigungsvorrichtungen deren Belastbarkeit im Vordergrund stehen, sind die Stege beispielsweise über die gesamte Länge wellenförmig ausgebildet, um deren Stabilität zu erhöhen. Allerdings liegt der herstellungstechnische Aufwand für die Ausführung hoch. Ausserdem erfüllt die Sicke die Funktion einer Sollbiegestelle, um die Montageschiene und somit die Befestigungsvorrichtung vor einer Überlastung zu schützen.

Um eine wirtschaftliche Herstellung sicherzustellen, weist die Halteplatte vorzugsweise eine gleichmässige Wandstärke auf.

Vorteilhafterweise überragt die, der Längsöffnung zugewandte, Seite der Halteplatte, zumindest im Bereich des Innengewindes, den übrigen Bereich der, der Längsöffnung zugewandten Seite, um einerseits eine ausreichende axiale Erstreckung des Innengewindes zu ermöglichen und andererseits die sich axial zum Innengewinde erstreckende Höhe der Stege zu minimieren.

Die axiale Erstreckung des Innengewindes entspricht vorteilhafterweise etwa dem 1,5- bis 4,5-fachen, vorzugsweise dem 2,25-fachen der Wandstärke d der Halteplatte.

Um eine wirtschaftliche Herstellung der Befestigungsvorrichtung sicherzustellen ist das Halteteil vorteilhafterweise als Stanz-Biegeteil ausgebildet.

Die Erfindung wird nachstehend anhand eines Ausführungsbeispieles näher erläutert. Es zeigen:
- Fig. 1: einen Querschnitt einer Befestigungsvorrichtung mit einem Befestigungselement;
- Fig. 2: eine Unteransicht des in Fig. 1 dargestellten Halteelements;
- Fig. 3: einen Längsschnitt des in Fig. 1 dargestellten Halteelements;
- Fig. 4: einen Querschnitt des in Fig. 1 dargestellten Halteelements;
- Fig. 5: eine Unteransicht eines weiteren Halteelements mit Sicken.

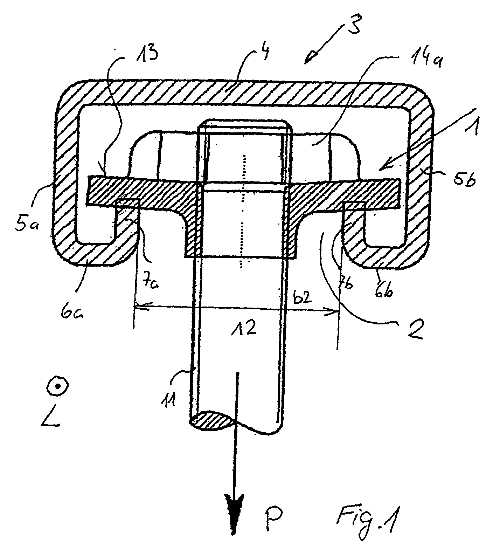

In den Fig. 1 bis 4 ist eine erfindungsgemässe Befestigungsvorrichtung mit einer, einen C-förmigen Querschnitt und eine Längsöffnung 2 aufweisenden, Montageschiene 3 und einer Halteplatte 1, dargestellt.

Die in Fig. 1 dargestellte längliche Montageschiene 3 mit etwa C-förmigem Querschnitt, die vorzugsweise aus einem einzigen Band aus verzinktem oder rostfreien Stahlblech geformt ist. Die Montageschiene 3 weist eine Rückwand 4 und zu beiden Längsseiten etwa senkrecht davon abragende Seitenwände 5a bzw. 5b auf. An ihren freien Vorderenden sind die Seitenwände 5a, 5b etwa rechtwinklig umgeknickt und bilden parallel zur Rückwand 4 verlaufende Stege 6a bzw. 6b, welche die in Längsrichtung L der Montageschiene 3 verlaufenden Längsöffnung 2 bilden. Die der Rückwand 4 zugewandte Seite der Stege 6a, 6b ist mit Rändelungen 7a, 7b versehen sein.

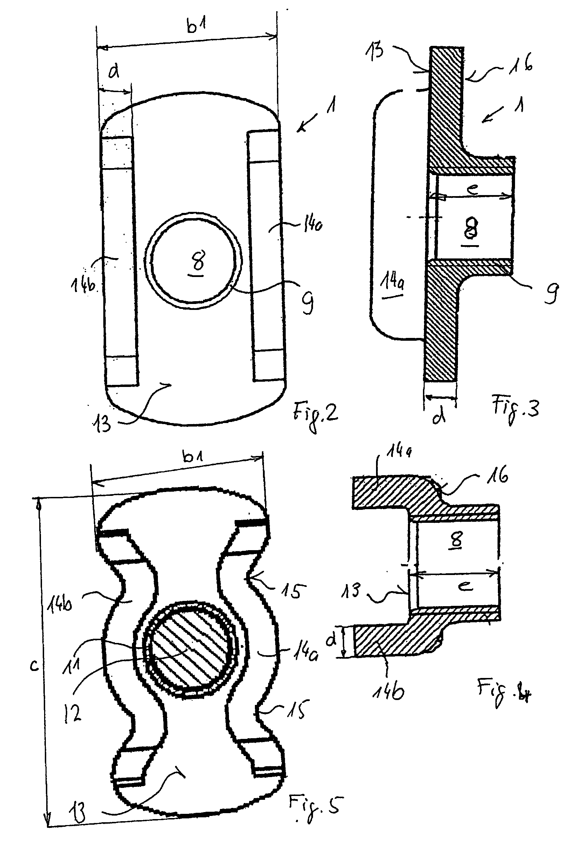

Die Halteplatte 1 weist eine, quer zur Plattenebene verlaufende, Durchgangsbohrung 8 mit einem Innengewinde 9 auf, wie dies insbesondere aus den Fig. 2 bis 4 hervorgeht. Die Durchgangsbohrung dient der formschlüssigen Aufnahme eines Befestigungselements, insbesondere eines mit einem Aussengewinde 11 versehenen Bolzens 12, wie er in Fig. 1 und 5 dargestellt ist. Die Halteplatte 1 eine, parallel zur Plattenebene verlaufende, Breite b1 auf, die etwa der Breite b2 der Längsöffnung 2 entspricht und weist senkrecht dazu eine, parallel zur Plattenebene verlaufende, Länge c auf, die grösser als die Breite b2 der Längsöffnung 2 ausgebildet ist. Die Halteplatte 1 weist ausserdem eine gleichmässige Wandstärke d auf.

Die im Querschnitt U-förmige Halteplatte 1 weist auf der, der Längsöffnung 2 abgewandten Seite 13, zwei der Versteifung und der Positionierung dienende Stege 14a, 14b auf, welche im Querschnitt, der insbesondere in der Fig. 4 dargestellt ist, die freien Schenkel bilden. Die Stege 14a, 14b sind als senkrecht zu der der Längsöffnung 2 abgewandten Seite 13, in Längsrichtung der Halteplatte 1 verlaufend ausgebildet.

Die, der Längsöffnung 2 zugewandten Seite 16 der Halteplatte 1 überragt im Bereich des Innengewindes 9, den übrigen Bereich dieser Seite 16, wie dies insbesondere aus Fig. 3 und 4 ersichtlich ist. Die axiale Erstreckung e des Innengewindes 9 entspricht etwa dem 2,25-fachen der Wandstärke d. Das Halteteil 1 ist beispielsweise als Stanz-Biegeteil ausgebildet.

Die in Fig. 5 dargestellte Ausführung weist an den Stegen 14a, 14b zusätzlich zwei das Innengewinde 9 berandende Sicken 15 auf. Die Sicken 15 dienen einerseits der Stabilisierung des Innengewindes 9 und andererseits als Überlastschutz für die Befestigungsvorrichtung. Greift am Befestigungselement, insbesondere am Bolzen 12, eine zu hohe Last P an, so führt dies im Bereich der Sicken 15 zu einem einknicken der Halteplatte 1. Dieser Überlastschutz verhindert, dass durch eine unzulässig hoch angebrachte Last P die gesamte Befestigungsvorrichtung versagt.

## Patentansprüche

1. Befestigungsvorrichtung zum Befestigen von Rohren oder dergleichen Gegenständen mit einer, einen C-förmigen Querschnitt sowie eine Längsöffnung (2) aufweisenden, Montageschiene (3) und mit einer Halteplatte (1), die eine quer zur Plattenebene verlaufende, Durchgangsbohrung (8) mit einem Innengewinde (9) aufweist, wobei die Halteplatte (1) eine, parallel zur Plattenebene verlaufende, Breite (b1) aufweist, die höchstens der Breite (b2) der Längsöffnung (2) entspricht und senkrecht dazu eine, parallel zur Plattenebene verlaufende, Länge (c) aufweist, die grösser als die Breite (b2) der Längsöffnung (2) ausgebildet ist, **dadurch gekennzeichnet, dass** die Halteplatte (1) auf der, der Längsöffnung (2) abgewandten Seite (13), zumindest einen der Versteifung und der Positionierung dienenden, sich in Richtung der Länge (c) erstreckenden Steg (14a, 14b) aufweist.

2. Befestigungsvorrichtung nach Anspruch 1, **dadurch gekennzeichnet, dass** zwei parallel zueinander verlaufende Stege (14a, 14b) vorgesehen sind.

3. Befestigungsvorrichtung nach Anspruch 2, **dadurch gekennzeichnet, dass** die Stege (14a, 14b) beidseits des Innengewindes (9) angeordnet sind.

4. Befestigungsvorrichtung nach Anspruch 3, **dadurch gekennzeichnet, dass** der Querschnitt der Halteplatte (1) U-förmige ausgebildet ist, wobei die freien Enden die Stege (14a, 14b) bilden.

5. Befestigungsvorrichtung nach einem der Ansprüche 1 bis 4, **dadurch gekennzeichnet, dass** die Stege (14a, 14b) zumindest auf einer Seite des Innengewindes (9) eine Sicke (15) bilden.

6. Befestigungsvorrichtung nach einem der Ansprüche 1 bis 5, **dadurch gekennzeichnet, dass** die Halteplatte (1) eine gleichmässige Wandstärke (d) aufweist.

7. Befestigungsvorrichtung nach einem der Ansprüche 1 bis 5, **dadurch gekennzeichnet, dass** die, der Längsöffnung (2) zugewandten Seite (16) die Halteplatte (1), zumindest im Bereich des Innengewindes (9), den übrigen Bereich der, der Längsöffnung (2) zugewandten, Seite (16) überragt.

8. Befestigungsvorrichtung nach einem der Ansprüche 1 bis 6, **dadurch gekennzeichnet, dass** die axiale Erstreckung (e) des Innengewindes (9) etwa dem 1,5- bis 4,5-fachen der Wandstärke (d) entspricht.

9. Befestigungsvorrichtung nach einem der Ansprüche 1 bis 7, **dadurch gekennzeichnet, dass** das Halteteil (1) als Stanz-Biegeteil ausgebildet ist.

## Claims

1. Fixing device for fixing pipes or the like objects, comprising an assembly rail (3) of C-shaped cross-section and a longitudinal opening (2), and a support plate (1) which comprises a throughbore (8) with an internal thread (9) which extends transversely to the plate level, and the support plate (1) has a width (b1) extending parallel to the plate level which corresponds at the most with the width (b2) of the longitudinal opening (2), and perpendicularly thereto a length (c) extending parallel to the plate level which is greater than the width (b2) of the longitudinal opening (2), **characterised in that** the support plate (1) has at the side (13) facing away from the longitudinal opening (2) at least one web (14a, 14b) which extends in the direction of the length (c) and serves to reinforce and position.

2. Fixing device according to Claim 1, **characterised in that** two webs (14a, 14b) are provided which extend parallel two each other.

3. Fixing device according to Claim 2, **characterised in that** the webs (14a, 14b) are arranged on both sides of the internal thread (9).

4. Fixing device according to Claim 3, **characterised in that** the cross-section of the support plate (1) is of U-shaped design, and the free ends form the webs (14a, 14b).

5. Fixing device according to one of Claims 1 to 4, **characterised in that** the webs (14a, 14b) form a bead (15) on at least one side of the internal thread (9).

6. Fixing device according to one of Claims 1 to 5, **characterised in that** the support plate (1) has a regular wall thickness (d).

7. Fixing device according to one of Claims 1 to 5, **characterised in that** the side (16) of the support plate (1) facing towards the longitudinal opening (2) protrudes at least in the area of the internal thread (9) the remaining area of the side (16) which is facing towards the longitudinal opening (2).

8. Fixing device according to one of Claims 1 to 6, **characterised in that** the axial extent (e) of the internal thread (9) corresponds approximately with between 1.5 and 4.5 times the wall thickness (d).

9. Fixing device according to one of Claims 1 to 7, **characterised in that** the support part (1) is designed as a flexural punched part.

## Revendications

1. Dispositif de fixation pour la fixation de tubes ou d'objets analogues, avec un rail de montage (3) présentant une section transversale en forme de C ainsi qu'une ouverture allongée (2) et avec une plaque de retenue (1) qui comporte un trou débouchant (8) qui s'étend transversalement au plan de la plaque et est pourvu d'un taraudage (9), la plaque de retenue (1) présentant, parallèlement à son plan, une largeur (b1) qui correspond au plus à la largeur (b2) de l'ouverture allongée (2) et présentant, perpendiculairement à cette dimension, une longueur (c) parallèle à son plan qui est supérieure à la largeur (b2) de l'ouverture allongée (2), **caractérisé en ce que**, sur le côté (13) orienté à l'opposé de l'ouverture allongée (2), la plaque de retenue (1) comporte au moins une mesure (14a, 14b) qui s'étend dans la direction de la longueur (c) et qui sert au renfort et au positionnement.

2. Dispositif de fixation selon la revendication 1, **caractérisé en ce que** deux mesures (14a, 14b) parallèles l'une à l'autre sont prévues.

3. Dispositif de fixation selon la revendication 2, **caractérisé en ce que** les mesures (14a, 14b) sont disposées de part et d'autre du taraudage (9).

4. Dispositif de fixation selon la revendication 3, **caractérisé en ce que** la section transversale de la plaque de retenue (1) est conformée en U, les extrémités libres formant les mesures (14a, 14b).

5. Dispositif de fixation selon une des revendications 1 à 4, **caractérisé en ce que**, au moins sur un côté du taraudage (9), les mesures (14a, 14b) forment une moulure (15).

6. Dispositif de fixation selon une des revendications 1 à 5, **caractérisé en ce que** la plaque de retenue (1) présente une épaisseur de paroi uniforme (d).

7. Dispositif de fixation selon une des revendications 1 à 5, **caractérisé en ce que** le côté (16) de la plaque de retenue (1) tourné vers l'ouverture allongée (2) dépasse, au moins dans la zone du taraudage (9), de la zone restante du côté (16) tourné vers l'ouverture allongée (2).

8. Dispositif de fixation selon une des revendications 1 à 6, **caractérisé en ce que** l'extension axiale (e) du taraudage (9) correspond approximativement à 1,5 à 4,5 fois l'épaisseur de paroi (d).

9. Dispositif de fixation selon une des revendications 1 à 7, **caractérisé en ce que** la partie de retenue (1) est conformée en pièce pliée estampée.
